# EUROPÄISCHE PATENTSCHRIFT

(11) **EP 1 943 930 B1**
(45) Veröffentlichungstag und Bekanntmachung des Hinweises auf die Patenterteilung: **19.05.2010**
(21) Anmeldenummer: 07000448.6
(22) Anmeldetag: 10.01.2007
(51) Int. Cl.: A47J 31/44

(54) **Getränkemaschine**
Beverage machine
Machine à boissons

(43) Veröffentlichungstag der Anmeldung: 16.07.2008
(73) Patentinhaber: WMF WÜRTTEMBERGISCHE METALLWARENFABRIK AG, 73309 Geislingen/Steige (DE)
(72) Erfinder: Startz, Armin, 89197 Weidenstetten (DE)
(74) Vertreter: Grünecker, Kinkeldey, Stockmair & Schwanhäusser Anwaltssozietät

(56) Entgegenhaltungen:
- EP-A- 0 573 274
- EP-A- 1 722 204
- US-A1- 4 311 048
- US-A1- 5 616 929

## Beschreibung

Die Erfindung bezieht sich auf eine Getränkemaschine der im Oberbegriff von Anspruch 1 erläuterten Art.

Eine derartige Getränkemaschine ist aus der EP 1 722 204 bekannt. Die bekannte Getränkemaschine enthält eine optische Füllstand-Auswerteinrichtung mit einer Lichtquelle und einem Empfangselement, die sich zumindest teilweise diametral an beiden Seiten eines Medien führenden Hohlraums gegenüberliegen. Der von der Lichtquelle ausgesandte Strahl durchquert die Medien führende Leitung und wird, je nach An- bzw. Abwesenheit eines festzustellenden Mediums unterschiedlich stark gebrochen. In einem Brechungszustand erreicht der Strahl den Empfänger und erzeugt ein Signal, im anderen Brechungszustand tut er dies nicht. Die bekannte Füllstands-Auswertungseinrichtung ist somit auf eine ganz spezielle konstruktive Anordnung festgelegt und funktioniert bei Medien, die für Licht in ausreichende Maße durchlässig sind.

Es sind weiterhin eine Vielzahl optisch wirkender Füllstands-Auswerteinrichtungen für die unterschiedlichsten Zwecke bekannt. So zeigt beispielsweise die US-A-4 311 048 eine Füllstand-Auswerteinrichtung, die aus einer Röhre besteht, die in das festzustellende Medium eingetaucht ist. An einer Stirnseite der Röhre ist die Lichtquelle und an der anderen Stirnseite der Röhre der Empfänger angeordnet. Die Wandung der Röhre ist mit unterschiedlichen Brechungszonen ausgebildet, die für unterschiedliche Brechungswinkel sorgen, je nach dem, ob die Röhre in die Flüssigkeit eintaucht, deren Füllstand gemessen werden soll, oder von Luft umgeben ist. Diese Auswertungseinrichtung muss jedoch direkt in den entsprechenden Behälter eingebaut werden, so dass die elektrischen Signalverbindungen der Flüssigkeit im Behälter ausgesetzt sind, wenn sie nicht besonders isoliert werden. Dies birgt die Gefahr von Korrosion oder sonstigen Beschädigungen.

Die EP-A-573 274 beschreibt eine Füllstandsmesseinrichtung für Tintenbehälter mit einem Brechungselement, einem Empfänger und einer Lichtquelle. Die Lichtquelle und der Empfänger sind unmittelbar am Behälter zu befestigen.

Die US-A-5 616 929 beschreibt eine Füllstand-Auswertungseinrichtung, die im bevorzugten Ausführungsbeispiel als visuelle Einrichtung mit einem Sichtfenster oder als Signal liefernde Einrichtung mit einem elektronischen Empfängerelement statt des Sichtfensters ausgerüstet ist. Während das Sichtfenster mit dem Brechungselement über einen Lichtleiter verbunden ist, sind die Lichtquelle und das Empfängerelement in der elektronischen Version direkt am Brechungselement angeordnet, so dass auch hier deren Position festgelegt ist.

Die Erfindung bezieht sich auf eine Getränkemaschine der im Oberbegriff von Anspruch 1 erläuterten Art.

Getränkemaschinen sind meist mit Vorratsbehältern ausgestattet, die entweder das zum Herstellen des Getränks erforderliche Wasser oder das Getränk selbst bzw. Getränkebestandteile bevorraten. Um feststellen zu können, wann diese Vorratsbehälter leer sind und neu befüllt werden müssen, bzw. um einen Befüllvorgang einzuleiten, sind Füllstands-Auswertungseinrichtungen üblich. Diese arbeiten überwiegend auf der Basis eines Schwimmers, der Schalter verschiedenste Art betätigt, also beispielsweise einen mechanischen Schalter über ein mechanisches Schaltgestänge oder elektrische Schalter, ebenfalls über Schaltgestänge oder über Magnete oder dergleichen. Weiterhin gibt es berührungslose Messverfahren, die den Füllstand z. B. mittels einer Veränderung eines kapazitiven Feldes vor einem Sensorelement abfragen. Die bekannten Füllstand-Auswertungseinrichtungen sind, im Falle der mechanischen Übertragung, verschmutzungs- und störanfällig, wobei bereits geringe Verschmutzungen, beispielsweise durch Kalk, den Schwimmer in seiner Bewegung behindern und das Signal verfälschen können. Weiterhin sind bei mechanischen Auswertungen immer ein Schwimmer oder Hebelwerk und ein Sensorelement in Form eines Reed- oder eines Hall-Schalters oder eines mechanischen Schalters notwendig. Kapazitive Sensoren sind häufig zu teuer und damit nicht wirtschaftlich einsetzbar.

Der Erfindung liegt die Aufgabe zu Grunde, eine Getränkemaschine mit einer konstruktiv einfachen, unempfindlichen und zuverlässigen Füllstands-Auswertungseinrichtung zu versehen.

Die Aufgabe wird durch die im Anspruch 1 angegebenen Merkmale gelöst.

Erfindungsgemäß wird eine Füllstands-Auswertungseinrichtung bereitgestellt, die in ihrer einfachsten Ausgestaltung in der Lage ist, einen bestimmten Befüllungsgrad sicher und unbeeinflusst von mechanischen Erschütterungen oder dergleichen, sowie auf konstruktiv einfache und kostengünstige Weise festzustellen. Die erfindungsgemäße Füllstand-Auswertungseinrichtung basiert auf der Anwendung der Brechungsgesetze, die zuverlässig reproduzierbar sind und somit zu sicheren Ergebnissen führen. Die notwendigen Bauteile sind leicht und kostengünstig erhältlich, wobei der Lichtleiter sowohl zum Leiten des Lichts von der Lichtquelle zum Brechungselement als auch zum Leiten des reflektierten Lichts vom Brechungselement zum Empfängerelement genutzt wird.

Vorteilhafte Weiterbildungen der Erfindung sind den Unteransprüchen zu entnehmen.

Bevorzugt ist das Brechungselement so ausgebildet, dass bei Abwesenheit des wässrigen Mediums ein Signal erzeugt werden kann, durch das entweder ein Befüllvorgang eingeleitet oder ein Alarm ausgelöst oder dergleichen Maßnahmen getroffen werden können.

Die Verbindung des Brechungselementes mit der Kunstlichtquelle über einen Lichtleiter stellt sicher, dass das Licht auch bei beengten Platzverhältnissen in vorbestimmter Weise das Brechungselement erreicht und dass vor allen Dingen nassempfindliche Bauteile, wie dies beispielsweise die Kunstlichtquelle aber auch das Empfängerelement sein kann, in sicherem Abstand vom Brechungselement und somit vom wässrigen Medium angeordnet werden können.

Die Empfindlichkeit und der Anwendungsbereich der erfindungsgemäßen Füllstand-Auswertungseinrichtung wird weiter erhöht, wenn das Empfängerelement in der Lage ist, wenigstens zwei unterschiedliche Lichtintensitäten zu identifizieren. Das kann durch den gleichen Sensor oder durch verschiedene Sensoren geschehen. Auf diese Weise kann beispielsweise eine Verkalkung und/oder eine Verschmutzung im Bereich des Brechungselements festgestellt werden.

Um Fremdlichteinflüsse zu minimieren wird vorzugsweise im nicht sichtbaren Infrarotbereich gearbeitet.

Die erfindungsgemäße Füllstands-Auswertungseinrichtung kann weiterhin mit einer Steuereinrichtung versehen sein, die die Auswertung der festgestellten Signale und deren Weiterleitung übernimmt.

Das Brechungselement wird bevorzugt aus einem Kunststoff gefertigt und kann, in besonders einfacher Weise, an einem transparenten Teil einer Begrenzung des Raums, der das wässrige Medium enthält, angeordnet sein.

Die erfindungsgemäße Füllstand-Auswertungseinrichtung kann für die unterschiedlichsten Verwendungszwecke, beispielsweise für Vorratsbehälter für Wasser, Milch oder fertiges Getränk oder Abwasserbehälter oder dergleichen eingesetzt werden, oder kann zur Identifizierung medienführender Leitungen eingesetzt werden. Die erfindungsgemäße Füllstand-Auswertungseinrichtung kann auch als gesondertes Bauteil zum Nachrüsten hergestellt und vertrieben werden.

Ein Ausführungsbeispiel der Erfindung wird nachfolgend anhand der Zeichnungen näher erläutert. Es zeigen:
- Fig. 1: eine stark schematisierte Darstellung einer Getränkemaschine mit einer übertriebenen vergrößerten erfindungsgemäßen Füllstand-Auswertungseinrichtung,
- Fig. 2: eine vergrößerte Darstellung des Brechungselementes bei einem ersten Brechungszustand,
- Fig. 3: das Brechungselement bei einem zweiten Brechungszustand, und
- Fig. 4: das Brechungselement bei einem dritten Brechungszustand.

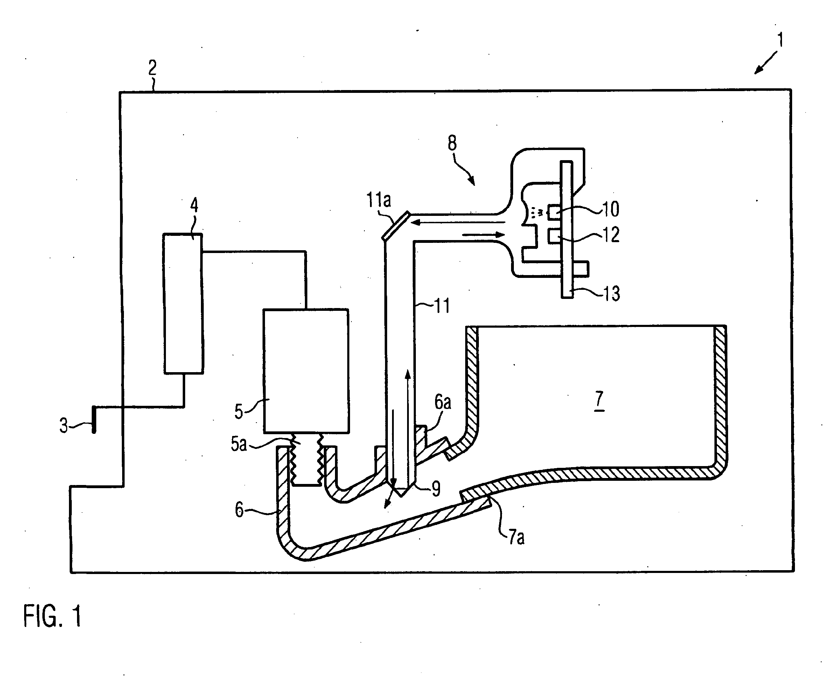

Fig. 1 zeigt in stark schematisierter Darstellung eine Getränkemaschine 1 die beispielsweise als Kaffeemaschine oder als Getränkeautomat oder dergleichen ausgebildet sein kann. Die Getränkemaschine 1 enthält ein Gehäuse 2, das die üblichen und herkömmlichen Bestandteile einer Getränkemaschine 1 umschließt und beispielsweise mit einer Zapfeinrichtung 3 zum Ausgeben eines Getränks versehen ist, die über eine Brüheinrichtung 4 und gegebenenfalls eine Pumpe 5 mit einem Auslauf 6 eines Behälters 7 verbunden ist. Der Vorratsbehälter 7 ist im dargestellten Ausführungsbeispiel ein Wassertank, kann jedoch auch ein Kaffee-Vorratsbehälter, ein Milch-Vorratsbehälter, ein Vorratsbehälter für ähnliche wässrige Medien, oder ein Abwasserbehälter oder eine ein wässriges Medium führende Leitung oder dergleichen sein.

Dem Behälter 7 ist eine Füllstands-Auswertungseinrichtung 8 zugeordnet. Die Füllstands-Auswertungseinrichtung 8 arbeitet optisch und enthält ein Brechungselement 9, das an einer Füllstandsmarke im Behälter 7 angeordnet ist, an der zur Aufrechterhaltung des geregelten Betriebs der Getränkemaschine entweder immer wässriges Medium vorhanden sein muss oder an der noch reichlich Zeit zum erneuten Auffüllen bleibt, sollte der Füllstand des wässrigen Mediums unter dieser Füllstandsmarke fallen. Im dargestellten Ausführungsbeispiel ist das Brechungselement 9 im Auslauf 6 des Behälters 7 an oder in der Nähe der tiefsten Stelle angeordnet. Das Brechungselement 9 kann ein gesondertes Bauteil sein und sich durch eine Wandung erstrecken, es kann aber auch als Teil eines transparenten Bereichs der Wandung selbst ausgebildet sein.

Das Brechungselement 9 wird von einer Kunstlichtquelle 10 angestrahlt. Dies geschieht über einen Lichtleiter 11. Die Kunstlichtquelle 10 ist bevorzugt eine Leuchtdiode und liefert bevorzugt Licht im nicht sichtbaren Infrarotbereich. Der Lichtleiter 11 kann beispielsweise ein transparentes Kunststoff-Formteil, ein Glasstab oder ein Glasteil oder ein Glasfaserstrang oder dergleichen sein. Je nach Ausbildung des Lichtleiters 11 können Spiegel 11 a oder andere Licht leitende Anordnungen getroffen werden, um sicher zu stellen, dass die von der Lichtquelle 10 ausgesandten Strahlen das Brechungselement 9 in einer vorab festgelegten Weise erreichen.

Die Füllstand-Auswertungseinrichtung 8 enthält weiterhin ein Empfängerelement 12 für reflektierte Strahlen. Das Empfängerelement 12 kann einen oder mehrere Sensoren, beispielsweise in Form einer Photodiode oder eines Phototransistors enthalten. Das Empfängerelement 12 ist bevorzugt fähig, verschiedene, d.h. wenigstens zwei verschieden Lichtintensitäten zu differenzieren.

Die Kunstlichtquelle 10 und das Empfängerelement 12 sind direkt mit einer Steuerung 13 verbunden, die hier als Steuerplatine ausgebildet ist. Die Steuereinrichtung 13 kann bei Verwendung des Lichtleiters 11 an fast beliebiger Stelle innerhalb des Gehäuses 1 angeordnet sein, sodass ihre Bestandteile gegen das wässrige Medium selbst, gegen Dampf oder erhöhte Temperaturen geschützt ist. Ein bevorzugter Platz ist die Steuereinrichtung für die Getränkemaschine.

Der Lichtleiter 11 der erfindungsgemäßen Füllstand-Auswertungseinrichtung 8 und das Brechungselement 9 sind bevorzugt aus einem Spritzgussteil gefertigt und damit sehr kostengünstig herstellbar. Der Anschluss an den Vorratsbehälter 7 erfolgt bevorzugt über das Auslassteil 6, das bevorzugt als Silikonformteil ausgebildet ist und zwischen eine Auslassöffnung 7a des Vorratsbehälters 7 und eine Einlassöffnung des nachfolgenden Bauteils, hier einem Anschlussstützen 5a der Pumpe 5, eingefügt wird. Der Auslass 6 hat weiterhin einen Flansch 6a, durch den der Lichtleiter 11 und/oder das Brechungselement 9 abdichtend hindurcherstreckt.

Das Brechungselement 9 ist bevorzugt als Prisma oder Kegel ausgebildet und bevorzugt aus dem gleichen Material wie der Lichtleiter 11, d.h. aus Kunststoff oder Glas. Das Brechungselement 9 ragt in das Innere des Auslasses 6/des Behälters 7 hinein, sodass es in das wässrige Medium eintaucht, sollte dieses an der Messstelle vorhanden sein.

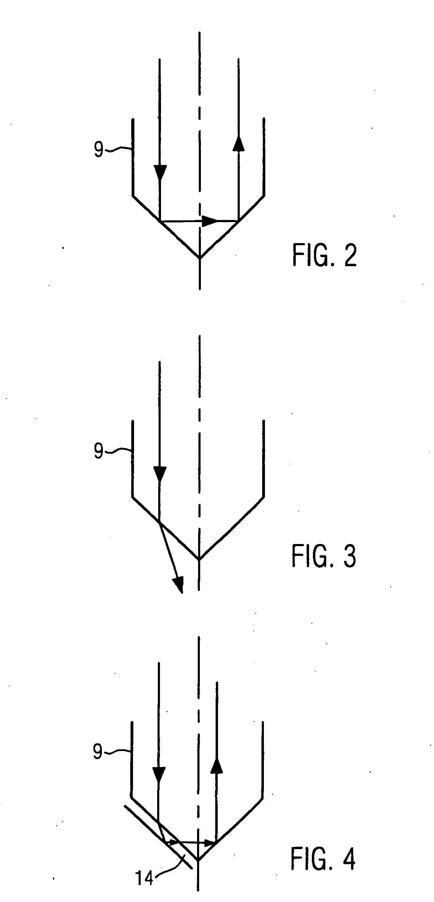

Bevorzugt ist das Brechungselement 9 so ausgebildet, dass Totalreflexion des einfallenden Lichts stattfindet, wenn das Brechungselement 9 von Luft umgeben ist, der Behälter somit leer ist. Dieser Zustand ist in Fig. 2 ersichtlich. Wie Fig. 2 zeigt, wird der ankommende Strahl an der Grenzfläche Brechungselement/Luft total reflektiert und, durch eine symmetrische spitz zulaufende Ausgestaltung des Brechungselementes 9 an der gegenüberliegenden Seite nochmals total reflektiert und gelangt zurück in den Lichtleiter 11 und von diesem in das Empfängerelement 12. Dort wird die Totalreflexion festgestellt und ein Signal erzeugt, das anzeigt, dass der Behälter 7 leer ist. Dieses Signal kann zum Steuern der Maschine oder zum Erzeugen eines Alarms oder dergleichen verwendet werden.

Das Brechungselement 9 ist weiterhin so ausgebildet, dass es bei Anwesenheit eines wässrigen Mediums am Brechungselement 9 den einkommenden Lichtstrahl beugt und zumindest zum großen Teil in das umgebende wässrige Medium transmittiert. Damit erreicht das Empfängerelement 12 kein oder nur ein so unwesentlicher Anteil an Licht, das das Empfängerelement 12 nicht anspricht.

Die erfindungsgemäße Füllstand-Auswertungseinrichtung funktioniert auch dann, wenn das Brechungselement 9 noch nass, d.h. noch mit einem Film 14 aus dem wässrigen Medium bedeckt ist. In diesem Falle wird der einfallende Lichtstrahl zunächst an der Grenzfläche Brechungselement/wässeriges Medium gebeugt, anschließend an der Grenzfläche wässeriges Medium/Luft total reflektiert, wonach zumindest ein Teil des reflektierten Lichts wieder in das Brechungselement 9 eintritt und dort erneut an der Grenzfläche Brechungselement/Luft total reflektiert und durch den Lichtleiter 11 zum Empfängerelement 12 zurückgeschickt wird.

Die erfindungsgemäße Füllstand-Auswertungseinrichtung kann weiterhin so kalibriert werden, dass der Verschmutzungsgrad, insbesondere der Grad einer Verkalkung festgestellt und angezeigt werden kann, da eventuell auftretende Kalkanlagerungen oder Verschmutzungen auf dem Brechungselement die Lichtbrechung beeinflussen.

Die erfindungsgemäße Füllstand-Auswertungseinrichtung ist auch zum Nachrüsten bereits bestehender Getränkemaschinen geeignet. Sie kann außer in den Auslauf eines Vorratsbehälters auch direkt in den Vorratsbehältern eingesetzt oder in Medien führende Leitungen vorgesehen sein.

In Abwandlung des beschriebenen und gezeichneten Ausführungsbeispiels können die optischen Winkel des Brechungselementes auch so ausgebildet sein, dass das Empfängerelement ein Signal erreicht, wenn das Brechungselement von dem wässerigen Medium umgeben ist.

## Patentansprüche

1. Getränkemaschine (1) mit einer Füllstand-Auswertungseinrichtung (8) für einen mit einem wässrigen Medium zu befüllenden Raum (6, 7), die eine Kunstlichtquelle (10), ein zumindest zeitweise im Medium angeordnetes Brechungselement (9), das von der Lichtquelle (10) angestrahlt ist, und ein Empfängerelement (12) für reflektierte Strahlen enthält, **dadurch gekennzeichnet, dass** die Kunstlichtquelle (10) und das Empfängerelement (12) mit dem Brechungselement (9) über einen gemeinsamen Lichtleiter (11) verbunden sind.

2. Getränkemaschine nach Anspruch 1, **dadurch gekennzeichnet, dass** das Brechungselement (9) so ausgebildet ist, dass das ankommende Licht bei Abwesenheit des wässrigen Mediums zum Empfängerelement (12) reflektiert wird.

3. Getränkemaschine nach Anspruch 1, **dadurch gekennzeichnet, dass** das Brechungselement (9) so ausgebildet ist, dass das ankommende Licht bei Abwesenheit des wässrigen Mediums im Lichtleiter (11) zurück reflektiert wird.

4. Getränkemaschine nach einem der Ansprüche 1 bis 3, **dadurch gekennzeichnet, dass** das Empfängerelement (12) wenigstens zwei unterschiedliche Lichtintensitäten identifizieren kann.

5. Getränkemaschine nach einem der Ansprüche 1 bis 4, **dadurch gekennzeichnet, dass** die Kunstlichtquelle (10) eine Infrarotlichtquelle ist.

6. Getränkemaschine nach einem der Ansprüche 1 bis 5, **dadurch gekennzeichnet, dass** eine Steuereinrichtung (13) vorgesehen ist, die mit der Kunstlichtquelle (10) und dem Empfängerelement (12) verbunden ist.

7. Getränkemaschine nach einem der Ansprüche 1 bis 6, **dadurch gekennzeichnet, dass** das Brechungselement (9) aus Kunststoff gefertigt ist.

8. Getränkemaschine nach einem der Ansprüche 1 bis 7, **dadurch gekennzeichnet, dass** das Brechungselement (9) an einem transparenten Teil einer Begrenzung des Raums (6, 7) angeordnet ist.

9. Füllstand-Auswertungseinrichtung (8) für wässrige Medien mit einer Kunstlichtquelle(10), einem mit der Kunstlichtquelle (10) über einen Lichtleiter (11) verbundenen Brechungselement (9), einem mit dem Brechungselement (9) über den gleichen Lichtleiter (11) verbundenen Empfängerelement (12) und einer Steuereinrichtung (13), die mit der Kunstlichtquelle (10) und dem Empfängerelement (12) verbunden ist.

## Claims

1. Beverage machine (1) comprising a level evaluation means (8) for a chamber (6, 7) which is to be filled with an aqueous medium and contains an artificial light source (10), a refraction member (9), which is arranged at least intermittently in the medium and is illuminated by the light source (10), and a receiving member (12) for reflected rays, **characterised in that** the artificial light source (10) and the receiving member (12) are connected to the refraction member (9) by a common light conductor (11).

2. Beverage machine according to claim 1, **characterised in that** the refraction member (9) is formed in such a way that the incident light is reflected towards the receiving member (12) in the absence of the aqueous medium.

3. Beverage machine according to claim 1, **characterised in that** the refraction member (9) is formed in such a way that the incident light is reflected back in the light conductor (11) in the presence of the aqueous medium.

4. Beverage machine according to any one of claims 1 to 3, **characterised in that** the receiving member (12) can identify at least two different light intensities.

5. Beverage machine according to any one of claims 1 to 4, **characterised in that** the artificial light source (10) is an infrared light source.

6. Beverage machine according to any one of claims 1 to 5, **characterised in that** a control means (13) is provided and is connected to the artificial light source (10) and the receiving member (12).

7. Beverage machine according to any one of claims 1 to 6, **characterised in that** the refraction member (9) is produced from plastics material.

8. Beverage machine according to any one of claims 1 to 7, **characterised in that** the refraction member (9) is arranged on a transparent portion of a boundary of the chamber (6, 7).

9. Level evaluation means (8) for aqueous media, comprising an artificial light source (10), a refraction member (9) connected to the artificial light source (10) by a light conductor (11), a receiving member (12) connected to the refraction member (9) by the same light conductor (11), and a control means (13) connected to the artificial light source (10) and the receiving member (12).

## Revendications

1. Machine à boissons (1) avec un dispositif d'évaluation de niveau (8), pour un espace (6, 7) à remplir avec un produit aqueux, qui contient une source de lumière artificielle (10), un élément de réfraction (9) disposé au moins temporairement dans le produit et éclairé par la source de lumière (10), et un élément de réception (12) pour les rayons réfléchis, **caractérisée en ce que** la source de lumière artificielle (10) et l'élément de réception (12) sont reliés à l'élément de réfraction (9) par un guide de lumière commun (11).

2. Machine à boissons selon la revendication 1, **caractérisée en ce que** l'élément de réfraction (9) est conçu de telle sorte que la lumière qui arrive soit réfléchie vers l'élément de réception (12), en l'absence de produit aqueux.

3. Machine à boissons selon la revendication 1, **caractérisée en ce que** l'élément de réfraction (9) est conçu de telle sorte que la lumière qui arrive soit réfléchie dans le conducteur de lumière (11), en l'absence de produit aqueux.

4. Machine à boissons selon l'une des revendications 1 à 3, **caractérisée en ce que** l'élément de réception (12) peut identifier au moins deux intensités lumineuses différentes.

5. Machine à boissons selon l'une des revendications 1 à 4, **caractérisée en ce que** la source de lumière artificielle (10) est une source de lumière infrarouge.

6. Machine à boissons selon l'une des revendications 1 à 5, **caractérisée en ce qu'**il est prévu un dispositif de commande (13) qui est relié à la source de lumière artificielle (10) et à l'élément de réception (12).

7. Machine à boissons selon l'une des revendications 1 à 6, **caractérisée en ce que** l'élément de réfraction (9) est en matière plastique.

8. Machine à boissons selon l'une des revendications 1 à 7, **caractérisée en ce que** l'élément de réfraction (9) est disposé sur une partie transparente d'une délimitation de l'espace (6, 7).

9. Dispositif d'évaluation (8) pour produits aqueux, avec une source de lumière artificielle (10), un élément de réfraction (9) relié à celle-ci par un conducteur de lumière (11), un élément de réception (12) relié à l'élément de réfraction (9) par le même conducteur de lumière (11), et un dispositif de commande (13) qui est relié à la source de lumière artificielle (10) et à l'élément de réception (12).
